# EUROPEAN PATENT SPECIFICATION

(11) **EP 4 046 144 B1**
(45) Date of publication and mention of the grant of the patent: **28.05.2025**
(21) Application number: 20803644.2
(22) Date of filing: 12.10.2020
(51) Int. Cl.: G07C 9/00, G07C 9/37, G07C 9/25, F16P 3/08

(54) **INDUSTRIAL SAFETY SYSTEM**
INDUSTRIELLES SICHERHEITSSYSTEM
SYSTÈME DE SÉCURITÉ INDUSTRIELLE

(30) Priority: 16.10.2019 IT 201900018986
(43) Date of publication of application: 24.08.2022
(73) Proprietor: Borsato, Simone, 31038 Paese (TV) (IT)
(72) Inventor: Borsato, Simone, 31038 Paese (TV) (IT)
(74) Representative: Citron, Massimiliano
(86) International application number: PCT/IB2020/059550
(87) International publication number: WO 2021/074766

(56) References cited:
- EP-A1- 3 502 539
- EP-A2- 3 139 354
- DE-A1- 10 152 349
- US-A1- 2010 289 616
- US-A1- 2018 030 759

## Description

The invention refers to an industrial safety system, in particular for regulating the access of people into a protected area wherein an industrial machine operates.

To avoid accidents at work, safety regulations require the area adjacent to an industrial machine to be fenced and equipped with controlled access, so that when the industrial machine is running the area is clear of people.

Some known systems use e.g. lockable gates or barriers, and are based on key exclusivity. But experience shows that people's lack of caution goes so far as to lend the keys or duplicate them, so that someone has even remained locked inside the protected area while the machine was running.

Other known systems use e.g. video cameras, such as US20190180539. But even in this case there are incidents, either because the cameras are temporarily tampered with or because the watchers of the video circuit got distracted.

EP 3 502 539 and DE 101 52 349 disclose other safety systems.

Then an infallible and foolproof security system would be needed.

Improving this state of the art is the main object of the invention.

A first aspect of the invention concerns a method of securing a protected area dedicated to the operation of an industrial machine according to claim 1.

This way it becomes impossible for the person entering the protected area to remain locked in there by mistake or accident.

To prevent a second person from being trapped in the protected area, in a preferred variant the method envisages
detecting by the sensor a univocal biometric data of each person in front of the entrance,
following the detection, opening the movable barrier to allow transit through the entrance,
inhibiting the closing of the movable barrier until some or the univocal biometric data of all previously detected persons are detected again by the sensor.

To detect if there is one or more persons at the entrance, in a preferred variant the method envisages
monitoring the area adjacent to the entrance with a sensor able to distinguish the number of present persons, e.g. a video camera, a proximity sensor, a load cell or infrared or ultrasound, and
opening the movable barrier only when all detected persons have entered their biometric data through the biometric data sensor.

To increase safety, in a preferred variant the method envisages
inhibiting the operation of the machine within the protected area until the biometric data sensor has detected some or the univocal biometric data of all previously detected persons or person.

To increase safety, in a preferred variant the method envisages
detecting by the sensor a univocal biometric data of each person in front of the entrance,
searching for the matching of the detected univocal biometric data in a database of authorized persons,
refusing to open the movable barrier if the match is not found.

Another aspect of the invention concerns a safety system for a protected area dedicated to the operation of an industrial machine according to claim 7.

In general, the electronic processor may be configured to perform a or each step of the method.

In particular, the electronic processor is configured for
detecting by the sensor a univocal biometric data of each person in front of the entrance,
following the detection, opening the movable barrier to allow transit through the entrance,
inhibiting the closing of the movable barrier until some or the univocal biometric data of all previously detected persons are detected again by the sensor.

Preferably, the protected area comprises a second sensor able to distinguish the number of present persons, e.g. a video camera, a proximity sensor, a load cell or infrared or ultrasound, and
the electronic processor is configured to
monitor the area adjacent to the entrance with the second sensor, and
open the movable barrier only when all detected persons have entered their biometric data through the biometric data sensor.

To increase safety, in a preferred variant the electronic processor is configured to
inhibit the operation of the machine within the protected area until the biometric data sensor has detected some or the univocal biometric data of all previously detected persons (or the person).

To increase safety, in a preferred variant the electronic processor is configured to
detect by the sensor a univocal biometric data of each person in front of the entrance,
search for the matching of the detected univocal biometric data in a database of authorized persons,
refuse to open the movable barrier if the match is not found.

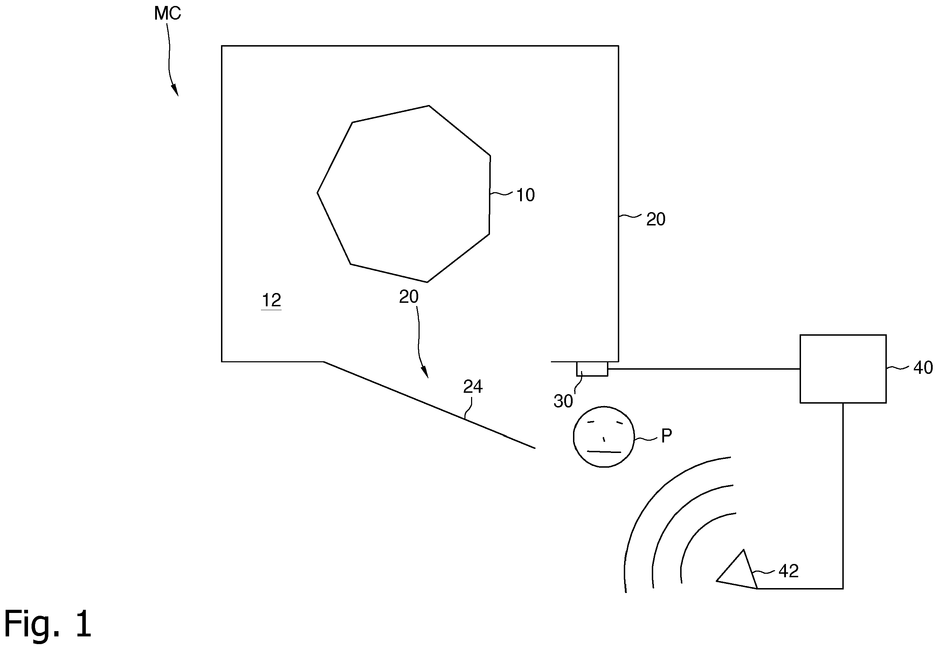

The advantages of the invention will be clearer from the following description of a preferred embodiment of system, referring to the attached drawing in which
- Fig. 1 shows a plan view of a safety area.

The safety system MC is used to monitor a work area 12 adjacent to a machine 10. The area 12 is fenced off by walls 20 and is accessible via an entrance 22 that can be closed by a gate 24.

Near the entrance 22 there is a fingerprint sensor 30 connected to an electronic control unit 40. In the electronic control unit 40 a program for the management of the transit at the entrance 22 is executed.

The operating logic is as follows.

The gate 24 is normally closed.

The electronic control unit 40 constantly monitors if the sensor 30 has detected a univocal biometric data of a person P who wants to enter the area 12.

Following the detection, the electronic control unit 40 controls the opening of the gate 24 (by known means) to allow transit through the entrance 22.

Then the electronic control unit 40 activates the closing of the gate 24 only if the sensor 30 detects again the univocal biometric data of the same person P.

In the case of several persons entering, in a preferred variant the system comprises a sensor 42, connected to the electronic control unit 40, to monitor the area adjacent to the entrance 22 in order to distinguish the number of present persons P. For example, the sensor 42 is a video camera, a proximity sensor, a load cell or a infrared or ultrasound device.

The electronic control unit 40 is then programmed to detect through the sensor 42 how many people are in front of the gate 20, and control the opening of the gate 24 only if all the detected people have inserted their biometric data through the sensor 30.

After the electronic control unit 40 has commanded the opening of gate 24, it is programmed to command the closing of the gate 24 only if all the detected previously people have entered again their biometric data through the sensor 30.

## Claims

1. Method of securing a protected area dedicated to the operation of an industrial machine (10), the area being equipped with
a fence (20) with an entrance (22),
a movable barrier (24) at the entrance to prevent or allow transit through the entrance (22),
a sensor (30) for detecting univocal biometric data and connected to an electronic processor (40) with the steps of
- detecting by the sensor (30) a univocal biometric data of a person,
- following the detection, controlling by the electronic processor (40) the opening of the movable barrier (24) to allow transit through the entrance (22),
- inhibiting by the electronic processor (40) the closing of the movable barrier (24) until the univocal biometric data of the same person is detected again by the sensor (30).

2. Method according to claim 1, wherein the univocal biometric data is the fingerprints or the image of the pupil.

3. Method according to any one of the preceding claims, with the steps of
- detecting by the sensor (30) a univocal biometric data of each person in front of the entrance (22),
- following the detection, controlling by the electronic processor the opening of the movable barrier (24) to allow transit through the entrance (22),
- inhibiting by the electronic processor the closing of the movable barrier (24) until the univocal biometric data of all previously detected persons are detected again through the sensor (30).

4. Method according to any of the previous claims, with the steps of
- monitoring the area adjacent to the entrance (22) with a second sensor (42) able to distinguish the number of present people, and
- controlling by the electronic processor the opening of the movable barrier (24) only when all the detected people have entered their biometric data through the biometric data sensor (30).

5. Method according to claim 3, with the step of inhibiting by the electronic processor the operation of the machine (10) within the protected area until the or some univocal biometric data of all the persons previously detected are detected through the univocal biometric data sensor (30).

6. Method according to any of the previous claims, wherein the electronic processor is configured to carry out the steps of detecting by the sensor (30) a univocal biometric data of each person in front of the entrance (22),
searching for the matching of the detected univocal biometric data in a database of authorized persons,
refusing to open the movable barrier (24) if the match is not found.

7. Safety system (MC) for a protected area dedicated to the operation of an industrial machine (10), the system comprising
the area equipped with
a fence (20) with an entrance (22),
a movable barrier (24) at the entrance (22) to prevent or allow transit through the entrance,
a sensor (30) of univocal biometric data, and
an electronic processor (40) configured for
- detecting by the sensor (30) a univocal biometric data of a person,
- following the detection, opening the movable barrier (24) to allow transit through the entrance (22),
- inhibiting the closing of the movable barrier (24) until the univocal biometric data of the same person is detected again by the sensor (30).

8. Safety system (MC) according to claim 7, wherein the electronic processor is configured for
- detecting by the sensor (30) a univocal biometric data of each person in front of the entrance (22),
- following the detection, opening the movable barrier (24) to allow transit through the entrance (22),
- inhibiting the closing of the movable barrier (24) until the univocal biometric data of all previously detected persons is detected again by the sensor (30).

9. Safety system (MC) according to claim 7 or 8, wherein the protected area comprises a second sensor (42) able to distinguish the number of present persons, and
the electronic processor is configured for
- monitoring the area adjacent to the entrance (22) with the second sensor (42), and
- opening the movable barrier (24) only when all the people detected have entered their biometric data through the biometric data sensor (30).

10. Safety system (MC) according to claim 8, wherein the electronic processor is configured for
- inhibiting the operation of the machine (10) within the protected area until the electronic processor detects by the biometric univocal data sensor (30) the or some univocal biometric data of all the previously detected persons.

11. Safety system (MC) according to claim 8, wherein the electronic processor is configured for
- detecting by the sensor (30) a univocal biometric data of each person in front of the entrance (22),
- searching for the matching of the detected univocal biometric data into a database of authorized persons,
- refusing to open the movable barrier (24) if no matching is found.

12. Safety system (MC) according to claim 9, wherein the second sensor (42) is a video camera, or a proximity sensor, or a load cell or infrared or ultrasound.

## Patentansprüche

1. Verfahren zum Sichern eines geschützten Bereichs, der dem Betrieb einer Industriemaschine (10) gewidmet ist, wobei der Bereich ausgestattet ist mit
einen Zaun (20) mit einem Eingang (22),
eine bewegliche Schranke (24) am Eingang, um den Durchgang durch den Eingang (22) zu verhindern oder zu ermöglichen,
einen Sensor (30) zur Erfassung eindeutiger biometrischer Daten, der mit einem elektronischen Prozessor (40) verbunden ist,
mit den Schritten von
- Erfassen eindeutiger biometrischer Daten einer Person durch den Sensor (30),
- nach der Erkennung Steuern des Öffnens der beweglichen Schranke (24) durch den elektronischen Prozessor (40), um den Durchgang durch den Eingang (22) zu ermöglichen,
- Sperren des Schließens der beweglichen Barriere (24) durch den elektronischen Prozessor (40), bis die eindeutigen biometrischen Daten derselben Person erneut durch den Sensor (30) erfasst werden.

2. Verfahren nach Anspruch 1, wobei die eindeutigen biometrischen Daten die Fingerabdrücke oder das Bild der Pupille sind.

3. Verfahren nach einem der vorhergehenden Ansprüche, mit den Schritten:
- Erfassen eindeutiger biometrischer Daten jeder Person vor dem Eingang (22) durch den Sensor (30),
- nach der Erkennung Steuern des Öffnens der beweglichen Schranke (24) durch den elektronischen Prozessor (40), um den Durchgang durch den Eingang (22) zu ermöglichen,
- Sperren des Schließens der beweglichen Schranke (24) durch den elektronischen Prozessor (40), bis die eindeutigen biometrischen Daten aller zuvor erfassten Personen erneut durch den Sensor (30) erfasst werden.

4. Verfahren nach einem der vorhergehenden Ansprüche, mit den Schritten:
- Überwachung des Bereichs neben dem Eingang (22) mit einem zweiten Sensor (42), der die Anzahl der anwesenden Personen erkennen kann, und
- Steuern des Öffnens der beweglichen Barriere (24) durch den elektronischen Prozessor (40) nur dann, wenn alle erkannten Personen ihre biometrischen Daten über den biometrischen Datensensor (30) eingegeben haben.

5. Verfahren nach Anspruch 3, mit dem Schritt:
Sperren des Betriebs der Maschine (10) innerhalb des geschützten Bereichs durch den elektronischen Prozessor (40), bis die eindeutigen biometrischen Daten aller zuvor erkannten Personen durch den eindeutigen biometrischen Datensensor (30) erfasst wurden .

6. Verfahren nach einem der vorhergehenden Ansprüche, wobei der elektronische Prozessor (40) die folgenden Schritte ausführt:
Erfassen eindeutiger biometrischer Daten jeder Person vor dem Eingang (22) durch den Sensor (30),
Suche nach der Entsprechung der erfassten eindeutigen biometrischen Daten in einer Datenbank autorisierter Personen,
und Verweigern des Öffnens der beweglichen Barriere (24), wenn die Übereinstimmung nicht gefunden wird.

7. Sicherheitssystem (MC) für einen geschützten Bereich, der dem Betrieb einer Industriemaschine (10) gewidmet ist, wobei das System umfasst
der Bereich ausgestattet mit
einen Zaun (20) mit einem Eingang (22),
eine bewegliche Barriere (24) am Eingang (22), um den Durchgang durch den Eingang zu verhindern oder zu ermöglichen,
einen Sensor (30) für eindeutige biometrische Daten und
einen elektronischen Prozessor (40), der konfiguriert ist für
- Erfassen eindeutiger biometrischer Daten einer Person durch den Sensor (30),
- nach der Erkennung Öffnen der beweglichen Schranke (24), um den Durchgang durch den Eingang (22) zu ermöglichen,
- Verhindern des Schließens der beweglichen Barriere (24), bis die eindeutigen biometrischen Daten derselben Person erneut vom Sensor (30) erfasst werden.

8. Sicherheitssystem (MC) nach Anspruch 7, wobei der elektronische Prozessor konfiguriert ist für
- Erfassen eindeutiger biometrischer Daten jeder Person vor dem Eingang (22) durch den Sensor (30),
- nach der Erkennung Öffnen der beweglichen Schranke (24), um den Durchgang durch den Eingang (22) zu ermöglichen,
- Sperren des Schließens der beweglichen Schranke (24), bis die eindeutigen biometrischen Daten aller zuvor erfassten Personen erneut vom Sensor (30) erfasst werden.

9. Sicherheitssystem (MC) nach Anspruch 7 oder 8, wobei der geschützte Bereich einen zweiten Sensor (42) umfasst, der die Anzahl der anwesenden Personen unterscheiden kann, und
Der elektronische Prozessor ist konfiguriert für
- Überwachen des Bereichs neben dem Eingang (22) mit dem zweiten Sensor (42) und
- Öffnen der beweglichen Schranke (24) erst, wenn alle erfassten Personen ihre biometrischen Daten über den Biometriesensor (30) eingegeben haben.

10. Sicherheitssystem (MC) nach Anspruch 8, wobei der elektronische Prozessor konfiguriert ist für
- Sperren des Betriebs der Maschine (10) innerhalb des geschützten Bereichs, bis der elektronische Prozessor über den biometrischen Eindeutigkeitsdatensensor (30) die oder einige eindeutige biometrische Daten aller zuvor erkannten Personen erfasst.

11. Sicherheitssystem (MC) nach Anspruch 8, wobei der elektronische Prozessor konfiguriert ist für
- Erfassen eindeutiger biometrischer Daten jeder Person vor dem Eingang (22) durch den Sensor (30),
- Suche nach der Zuordnung der erfassten eindeutigen biometrischen Daten zu einer Datenbank autorisierter Personen,
- und Verweigern der Öffnung der beweglichen Barriere (24), wenn keine Übereinstimmung gefunden wird.

12. Sicherheitssystem (MC) nach Anspruch 9, wobei der zweite Sensor (42) eine Videokamera, ein Näherungssensor, eine Wägezelle, Infrarot oder Ultraschall ist.

## Revendications

1. Procédé de sécurisation d'une zone protégée dédiée au fonctionnement d'une machine industrielle (10), la zone étant équipée
une clôture (20) avec une entrée (22),
une barrière mobile (24) à l'entrée pour empêcher ou permettre le transit par l'entrée (22),
un capteur (30) permettant de détecter des données biométriques univoques et connecté à un processeur électronique (40),
avec les pas de
- détecter par le capteur (30) une donnée biométrique univoque d'une personne,
- suite à la détection, commander par le processeur électronique (40) l'ouverture de la barrière mobile (24) pour permettre le passage par l'entrée (22),
- inhibant par le processeur électronique (40) la fermeture de la barrière mobile (24) jusqu'à ce que les données biométriques univoques de la même personne soient à nouveau détectées par le capteur (30).

2. Procédé selon la revendication 1, dans lequel les données biométriques univoques sont les empreintes digitales ou l'image de la pupille.

3. Procédé selon l'une quelconque des revendications précédentes, comprenant les étapes consistant à
- détecter par le capteur (30) une donnée biométrique univoque de chaque personne devant l'entrée (22),
- suite à la détection, commander par le processeur électronique (40) l'ouverture de la barrière mobile (24) pour permettre le passage par l'entrée (22),
- inhibant par le processeur électronique (40) la fermeture de la barrière mobile (24) jusqu'à ce que les données biométriques univoques de toutes les personnes précédemment détectées soient à nouveau détectées par le capteur (30).

4. Procédé selon l'une quelconque des revendications précédentes, comprenant les étapes consistant à
- surveiller la zone adjacente à l'entrée (22) avec un deuxième capteur (42) capable de distinguer le nombre de personnes présentes, et
- en contrôlant par le processeur électronique (40) l'ouverture de la barrière mobile (24) uniquement lorsque toutes les personnes détectées ont saisi leurs données biométriques via le capteur de données biométriques (30).

5. Procédé selon la revendication 3, avec l'étape de
inhibant par le processeur électronique (40) le fonctionnement de la machine (10) dans la zone protégée jusqu'à ce que la ou certaines données biométriques univoques de toutes les personnes précédemment détectées soient détectées à travers le capteur de données biométriques univoques (30).

6. Procédé selon l'une quelconque des revendications précédentes, dans lequel le processeur électronique (40) effectue les étapes suivantes :
détecter par le capteur (30) une donnée biométrique univoque de chaque personne devant l'entrée (22),
recherche de la correspondance des données biométriques univoques détectées dans une base de données de personnes autorisées,
refusant d'ouvrir la barrière mobile (24) si la correspondance n'est pas trouvée.

7. Système de sécurité (MC) pour une zone protégée dédiée au fonctionnement d'une machine industrielle (10), le système comprenant
la zone équipée de
une clôture (20) avec une entrée (22),
une barrière mobile (24) à l'entrée (22) pour empêcher ou permettre le transit par l'entrée,
un capteur (30) de données biométriques univoques, et
un processeur électronique (40) configuré pour
- détecter par le capteur (30) une donnée biométrique univoque d'une personne,
- suite à la détection, ouverture de la barrière mobile (24) pour permettre le passage par l'entrée (22),
- inhibant la fermeture de la barrière mobile (24) jusqu'à ce que les données biométriques univoques de la même personne soient à nouveau détectées par le capteur (30).

8. Système de sécurité (MC) selon la revendication 7, dans lequel le processeur électronique est configuré pour
- détecter par le capteur (30) une donnée biométrique univoque de chaque personne devant l'entrée (22),
- suite à la détection, ouverture de la barrière mobile (24) pour permettre le passage par l'entrée (22),
- inhibant la fermeture de la barrière mobile (24) jusqu'à ce que les données biométriques univoques de toutes les personnes précédemment détectées soient à nouveau détectées par le capteur (30).

9. Système de sécurité (MC) selon la revendication 7 ou 8, dans lequel la zone protégée comprend un deuxième capteur (42) capable de distinguer le nombre de personnes présentes, et
le processeur électronique est configuré pour
- surveiller la zone adjacente à l'entrée (22) avec le deuxième capteur (42), et
- ouvrir la barrière mobile (24) uniquement lorsque toutes les personnes détectées ont saisi leurs données biométriques via le capteur de données biométriques (30).

10. Système de sécurité (MC) selon la revendication 8, dans lequel le processeur électronique est configuré pour
- inhibant le fonctionnement de la machine (10) dans la zone protégée jusqu'à ce que le processeur électronique détecte par le capteur de données biométriques univoques (30) la ou certaines données biométriques univoques de toutes les personnes précédemment détectées.

11. Système de sécurité (MC) selon la revendication 8, dans lequel le processeur électronique est configuré pour
- détecter par le capteur (30) une donnée biométrique univoque de chaque personne devant l'entrée (22),
- recherche de la correspondance des données biométriques univoques détectées dans une base de données de personnes autorisées,
- refusant d'ouvrir la barrière mobile (24) si aucune correspondance n'est trouvée.

12. Système de sécurité (MC) selon la revendication 9, dans lequel le deuxième capteur (42) est une caméra vidéo, ou un capteur de proximité, ou une cellule de charge ou infrarouge ou ultrasonore.
